# EUROPEAN PATENT SPECIFICATION

(11) **EP 3 541 024 B1**
(45) Date of publication and mention of the grant of the patent: **25.11.2020**
(21) Application number: 18161661.6
(22) Date of filing: 14.03.2018
(51) Int. Cl.: H04L 12/28, H04L 12/24

(54) **PROVIDING BUILDING AUTOMATION EQUIPMENT WITH IDENTIFIERS VIA A PORTABLE ELECTRONIC DEVICE**
BEREITSTELLUNG VON GEBÄUDEAUTOMATIONSKENNUNGEN ÜBER EINE TRAGBARE ELEKTRONISCHE VORRICHTUNG
FOURNITURE D'IDENTIFICATEURS À DES ÉQUIPEMENTS D'AUTOMATISATION DU BÂTIMENT PAR L'INTERMÉDIAIRE D'UN DISPOSITIF ÉLECTRONIQUE PORTABLE

(43) Date of publication of application: 18.09.2019
(73) Proprietor: ABB Schweiz AG, 5400 Baden (CH)
(72) Inventor: GOPALAKRISHNAN, Gayathri, 141 52 Huddinge (SE); ZORIC, Goranka, 725 91 Västerås (SE)
(74) Representative: Kransell & Wennborg KB

(56) References cited:
- WO-A1-2015/104248
- WO-A1-2018/024528
- US-A1- 2006 074 494

## Description

### TECHNICAL FIELD

The invention relates to building automation systems. More particularly, the invention relates to a portable electronic device in a building automation system as well as to a method and computer program product for providing pieces of building automation equipment with identifiers.

### BACKGROUND

The evolution of building automation has led to a significant increase in the number of features and functions that adorn every room.

Thereby also the number of equipment used for implementing these functions have increased, which may give rise to some problems.

WO 2015/104248 describes a method enabling commissioning of a system comprising a plurality of controllable devices capable of transmitting their identification signals. The method includes receiving identification signals from the devices, displaying a map of a structure and icons corresponding to the devices from which the identification signals have been received, detecting a first user input indicating a selection by a user of a first icon from the displayed icons, the first icon corresponding to a first device, and, in response to the first user input, providing a command to the first device to issue a cue identifying the first device to the user. The method further includes, subsequent to the first device issuing the cue, detecting a second user input indicating a selection by the user of a location on the map for the first icon, and displaying the first icon on the map at the selected location.

US 2006/0074494 describes that in a building environment, a coordinate location or local position of various automation devices is determined. The location or position maybe determined using a wireless distance measurement. Applications, associations, and utilizations for wireless building automation devices are developed according to location and/or positions of the devices. The position may be determined based on techniques for determining a relative distance of device from other devices and/or a reference point. The position may be mapped to the coordinate location within the building. Devices may be grouped, a commissioning table of binding associations between devices maybe created, and addresses assigned to the building automation devices according to the location, the position and/or distances between the devices. Associations between devices may be established and updated based on proximity of the devices. Device communication also may be controlled according to position and distance information.

WO 2018/024528 describes an electronic building automation system, comprising multiple electronic building automation devices and a commissioning device. The multiple electronic building automation devices comprising a beacon receiver arranged to receive localizing beacon signals transmitted from multiple beacons installed in the vicinity of the multiple building automation devices. The commissioning device is configured to localize a building automation device using the localization information in a beacon message received from the building automation device to obtain an estimated location of the building automation device to commission the building automation device in the building automation system.

In order to be able to communicate in the building automation system, the equipment may be provided with identifiers, such as physical addresses. It may be of interest to provide such identifiers after the equipment has been mounted/installed in the building automation system. This may not be that simple to carry out.

Aspects of the invention address such situations.

### SUMMARY

One object of the invention is therefore to simplify the way identifiers are provided to pieces of building automation equipment in a building automation system.

This object is according to a first aspect achieved by a portable electronic device in a building automation system, in accordance with claim 1.

The object is according to a second aspect achieved through a method for providing pieces of building automation equipment in a building automation system with identifiers, in accordance with claim 9.

The object is according to a third aspect further achieved through a computer program product for providing pieces of building automation equipment in a building automation system with identifiers, in accordance with claim 15.

The invention according to the above-mentioned aspects has a number of advantages. It provides a simpler and more natural workflow for electrical installers. It can be used without extensive knowledge of the way identifiers are assigned. Many manual steps can also be reduced, leading to time saving and less errors. It is furthermore easy to implement in a portable electronic device. It can be provided only using software.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a building automation system,
fig. 2 shows a front view of a portable electronic device for use in providing identifiers to automation equipment in the building automation system,
fig. 3 schematically shows various units making up the portable electronic device,
fig. 4 schematically shows an area of the building automation system where a number of a pieces of automation equipment are located,
fig. 5 shows a view of the display of the portable electronic device showing the area with the equipment and identifiers to be provided to them as well as graphical representations of pieces of automation equipment detected in the area,
fig. 6 shows a view of the display of the portable electronic device when the graphical representations of the detected pieces of automation equipment have been moved to the displayed equipment and identifiers,
fig. 7 shows a flow chart of a number of method steps in a first variation of a method of providing pieces of automation equipment with identifiers, which method is being performed in the portable electronic device,
fig. 8 shows a flow chart of a number of method steps in a second variation of a method of providing pieces of automation equipment with identifiers, which method is also being performed in the portable electronic device, and
fig. 9 shows a computer program product in the form of a CD ROM disc with a computer program performing the functionality of the portable electronic device when being loaded therein.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards building automation systems, such as systems where the atmospheres of rooms are influenced using functions. Examples comprise the use of light sources or of blinds, the temperature of the room and the ventilation of the room.

In the following, a detailed description of preferred embodiments of a method, portable electronic device and computer program product providing pieces of building automation equipment with identifiers will be given.

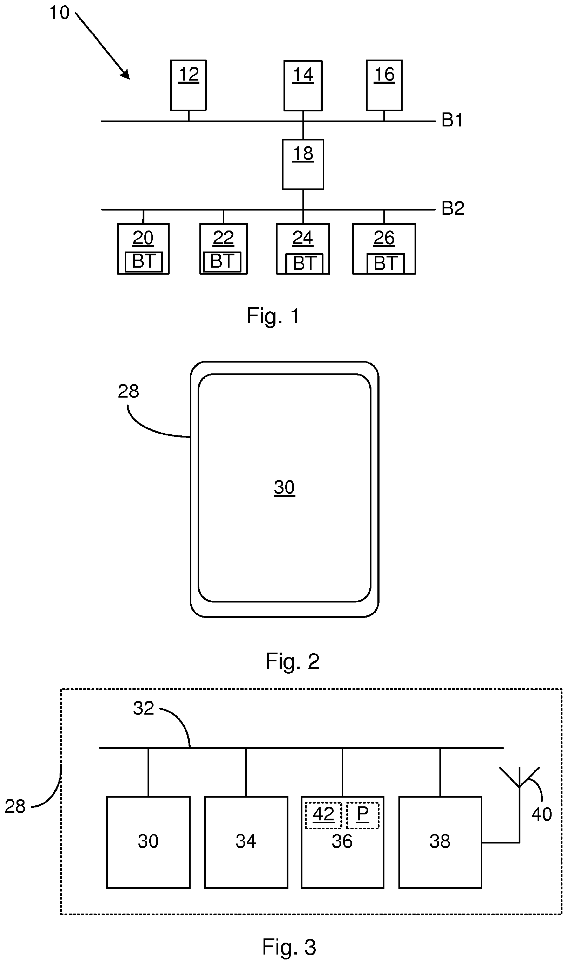

Fig. 1 schematically shows the building automation system 10, where a number of operator work stations 12, 14 and 16 or process monitoring computers and connected to a first data bus B1.

There is furthermore a second data bus B2 and between the first and second data busses B1 and B2 there is connected a controller 18 controlling a number of pieces of automation equipment connected to the second data bus B2. The equipment is equipment controlling functions such as heating, ventilation, air-conditioning and lights in the building automation system 10.

The different pieces of equipment are furthermore equipped with short-range communication capabilities. There is therefore a first piece of building automation equipment 20, a second piece of building automation equipment 22, a third piece of building automation equipment 24 and a fourth piece of building automation equipment 26 connected to the second data bus B2, where each such piece of equipment 20, 22, 24 and 26 is controlled by the controller 18 and equipped with a short-range communication interface, which is here exemplified by a Bluetooth (BT) interface.

It should be realized that the controller and/or operator work stations may also be equipped with short-range communication interfaces. However, the interfaces have been omitted in order to illustrate that these devices do not have to have them.

Fig. 2 schematically shows a front view of a portable electronic device 28. It simply comprises a display 30. The display 30 is a type of user interface. In some variations of the invention it is a touch screen via which data can be presented for the user of the portable electronic device 28 as well as via which data can be entered by the user, such as selections of various features in applications. It should be realized that in other variations of the invention the display may only be a display and the inputs provided through a keypad or a keyboard, a trackball, a joystick or some other buttons. The portable electronic device 28 may as an example may be a lap top computer, a tablet or a smart phone.

Fig. 3 shows a block schematic of various units in the interior of the portable electronic device 28. The portable electronic device 28 comprises a bus 32 and to this bus there is connected the display 30, a processor 34, a memory 36 as well as a wireless short-range communication circuit 38. The wireless short-range communication circuit 38 is furthermore connected to an antenna 40. The wireless short-range communication circuit 38 and antenna 40 is here a short-range communication interface provided for communication with the previously disclosed pieces of building automation equipment.

In the memory 36 there is provided software code which when being run by the processor 34 forms a control unit 42. There is also a map or plan P of the layout of the building automation system in the memory 36.

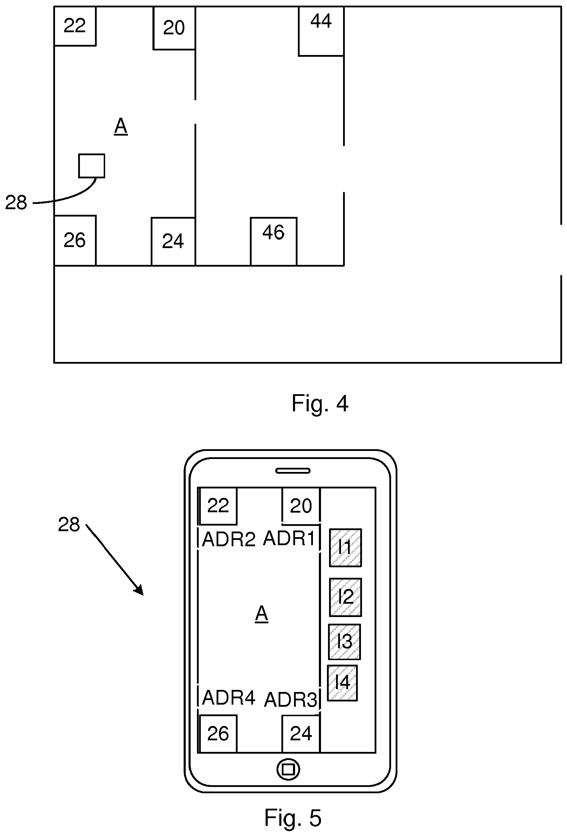

Fig. 4 schematically shows an area A of the building automation system in which pieces of building automation equipment are to receive identifiers, such as addresses used for communication in the building automation system.

The area may be an area of a building. In the example of fig. 4 the area A is realized as a first room of a building. In this first room the first, second, third and fourth pieces of building automation equipment 20, 22, 24 and 26 are located. In this figure the portable electronic device 28 is also located in the first room, which indicates that also a corresponding user is in this first room. Next to the first room there is a second room with some other pieces of building automation equipment 44 and 46.

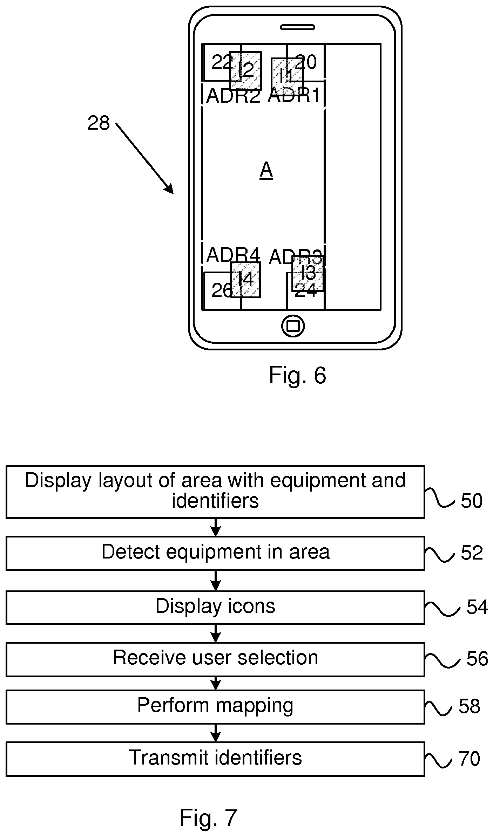

A first embodiment will now be described with reference also being made to fig. 5, 6 and 7, where fig. 5 schematically shows a first view shown on the display 30 of the portable electronic device 28, fig. 6 shows a second view shown on the display 30 of the portable electronic device 28 and fig. 7 shows a flow chart of a number of method steps being performed in a first variation of a method of providing pieces of building automation equipment with identifiers, which method steps are being performed by the portable electronic device 28.

The building automation system may be a so-called KNX system. The installation of KNX systems is different from traditional electrical systems in that all the building automation equipment are typically assigned identifiers, such as physical addresses, prior to hardware installation. System integrators (SIs) and Electrical installers (EIs) follow a series of time and effort intensive steps which also increases the probability of error. The process also involves additional logistics costs.

A solution that alleviates the above stated problems is proposed through the user interface of the portable electronic device allowing electrical installers to assign physical addresses to KNX devices post hardware installation. According to aspects of the invention, the control unit 42 provides a tool that is accessible on the portable electronic device, which tool offers a more efficient, cost effective and natural workflow for electrical installers. It also contributes to a higher satisfaction level among users (EIs) of KNX products, and potentially widens the user group to include EIs with limited KNX experience.

In traditional installation, first the EIs lay out all the wiring and mount all the equipment in the building. If any logic is needed, it is programmed by SIs independent of the hardware installation process. In KNX, each piece of equipment on a KNX bus line, such as on the second bus B2, needs to be assigned a physical address which acts as the unique identifier for the piece of equipment. The addressing task involves connecting the piece of equipment to a bus, pressing a button on the piece of equipment and entering an address through an Engineering Tool Software (ETS) on a laptop. Although it is possible for this addressing to be performed after mounting, it is not practical. SIs (or KNX trained EIs) are more expensive and thus employing them to go on field, find every piece of equipment, access them and address them would be inefficient.

As an alternative, the following process may be used:
1. The pieces of equipment are procured by the EI and shipped to the SIs' office.
2. The SI annotates the floor plans with a unique address for each device
3. The SI connects each piece of equipment to a kit and assigns a physical address to it. To assign a physical address, the SI must switch the device to 'programming mode' by pressing a dedicated button. SIs often face complications in identifying how to access the button since the mechanism varies across equipment.
4. The physical address of the piece of equipment is printed on a sticker and affixed to the piece of equipment for future reference.
5. The equipment is then shipped to the field.
6. The electrical installer compares the physical address on each piece of equipment with the addresses on the annotated floor plan and then mounts the pieces of equipment in their respective positions.

The drawbacks of this process are:
1. Logistics overhead in shipping devices between SI and EI
2. The addressing process by the SI is time and effort intensive
3. It is challenging for EIs to constantly refer to the map while mounting devices
4. Greater chance for error as exchanging the position of 2 devices (of the same kind) can result in failure

According to aspects of the invention a tool is provided that allows addressing to be done by the EI without the need for support from SIs. The key value of the tool is that it allows EIs to follow a traditional installation process even for KNX systems. It also reduces the frequency of error during the installation process.

It is in the following assumed that the pieces of equipment are installed in the different areas of the building automation system 10, such as in the area A shown in fig. 4. However, the physical pieces of equipment have not yet received their identifiers that they are to use when communicating in the building automation system 10.

However, they have been allocated addresses and identifiers that are present on a map or plan P of the layout of the building automation system, which plan typically comprises a map of different areas of the premises such as different rooms and which pieces of building automation equipment are present in the different rooms. Above-all the plan P comprises the allocated identifiers of the pieces of building automation equipment.

An EI is in the following is a user which is equipped with the portable electronic device 28. The device 28 is equipped with the previously described map or plan P of the layout of the premises comprising representations of the pieces of building automation equipment and their allocated identifiers.

The portable electronic device 28 may thus be equipped with a layout of the premises of the building automation system, which may be a map or plan P outlining where the pieces of building automation equipment are being placed and connected to the bus B2. It may more particularly have a map of each room and a graphical representation of each of the pieces of equipment in each room. This map or plan P may be stored in the memory 36. The pieces of equipment may in this case be represented by graphical symbols on the plan, where the symbols represent the equipment types, where a type may be a fan, a radiator, a light source etc., each being possible to control via the controller 18. The corresponding identifiers may also be visible.

This map may have been created by an SI.

As the user, i.e. the EI, enters an area, such as the room A shown in fig. 4, he or she may then obtain the plan P of the room or area with pieces of equipment and their allocated identifiers, which may then be displayed on the display 30 by the control unit 42, step 50. Thereby a number of pre-allocated identifiers ADR1, ADR2, ADR3, ADR4 to be used by the pieces of building automation equipment in the area of the building automation system are displayed. As can be seen in fig. 5, according to the plan P, the area A comprises the first, second, third and fourth pieces of automation equipment 20, 24, 26 and 28 with their assigned identifiers ADR1, ADR2, ADR3 and ADR4 in a left side of the display 30 depicting the map of the area A. The first piece of equipment 20 has thus been allocated a first identifier ADR1, the second piece of equipment 22 has been allocated a second identifier ADR2, the third piece of equipment 24 has been allocated a third identifier ADR3 and the fourth piece of equipment 26 has been allocated a fourth identifier ADR4.

Thereafter the control unit 42 detects the pieces of equipment that are actually present in the area A of the building automation system, step 52, which is thus done when the portable electronic device 28 is located in the area A. This detection may be performed using the short-range communication interface 38 and 40 and involve obtaining information about type of equipment. The display 30 then displays the detected pieces of building automation equipment, which may be done through displaying graphical representations of the detected pieces of equipment, for instance in the form of icons, step 54. As can be seen in fig. 5, graphical representations may be displayed as icons I1, I2, I3 and I4 on a right side of the display 30, for instance in a list. A graphical representation is displayed for every piece of equipment that is detected in the area A. It is here possible that the control unit 42 investigates if there is match in the area between the number of pieces of equipment on the plan and the number being detected. A discrepancy may be indicated if the numbers do not match.

The control unit 42 then receives user selections made in respect of the displayed icons, step 56, which user selections may involve associations of the displayed icons with the equipment on the map. The control unit 42 may thus receive a user selection of an identifier and a piece of building automation equipment.

A user may thus associate a detected piece of automation equipment with a piece of equipment and above-all with an allocated identifier present on the map. It is for instance possible that the user drags an icon and drops it on a corresponding representation on the map. This is schematically illustrated in fig 6, where it can be seen that the first icon I1 has been dropped on the first piece of automation equipment 20 and associated first identifier ADR1, the second icon I2 has been dropped on the second piece of automation equipment 22 and associated second identifier ADR2, the third icon I3 has been dropped on the third piece of automation equipment 24 and associated third identifier ADR3 and the fourth icon I4 has been dropped on the fourth piece of automation equipment 26 and associated first identifier ADR4. In this way the graphical representations I1, I2, I3, I4 of the detected pieces of building automation system are moved to the corresponding elements 20, 22, 24, 26 in the plan P.

As this has been done the control unit 42 then performs a mapping between the identifiers and the detected pieces of building automation equipment. There is thus a mapping between the selected identifier and piece of building automation equipment. In this way the control unit 42 maps the physical piece of equipment represented by the icon to the identifier allocated to the mapped element on the plan, step 58. It is here possible that the actual physical equipment identifies itself as being of a certain type and that the control unit 42 when performing mapping maps an identifier to a piece of building automation equipment based on type. If for instance only one piece of equipment in the area is of the same type, then an automatic mapping for the type may be made without user involvement. Thus, if there is only one piece of equipment of a type in the area both in the plan as well as among the detected pieces of equipment, then an automatic mapping may be made. It is also possible that the control unit 42 makes suggestions based on type. It may for instance indicate to the user which of the pieces of equipment on the map is of a certain type and then suggest that an icon of the same type to be matched with one of them. The user may then accept or deny the suggestion and if denied, a further suggestion may be made.

When an automatic or semiautomatic mapping is being made, the user may need to confirm the mapping before it is actually carried out.

After a physical piece of equipment has been mapped to a corresponding piece of equipment on the plan and more particularly to an identifier of the plan and after a possible confirmation, the control unit 42 then transmits the mapped identifier to the physical piece of equipment via the short-range interface. The mapped identifiers are more particularly transmitted to the pieces of equipment using the short-range interface 38 and 40, step 60, where the identifiers are to be used for communication in the building automation system. The identifiers are thus to be used by the equipment when communicating in the building automation system, i.e. when communicating on the data buses. They are normally not intended to be used for identifying the equipment via the short-range interfaces.

It can thereby be seen that the pieces of equipment in the area A receive the allocated identifiers in an efficient way without requiring any extensive knowledge by the user. The pieces of building automation equipment may thereafter be able to communicate property with the building automation system.

The operation could also be described in the following way:
The EI procures all the pieces of building automation equipment and mounts them on site without having to worry about the physical addresses of the equipment. This saves time as the EI does not have to wait for the SI to share the addressed equipment or maps. As the equipment have not been addressed, equipment of the same kind or type can be used interchangeably.

Once all the pieces of building automation equipment are mounted, the EI can use the user interface 30 of the portable electronic device 28 to choose the room where he or she is physically present. Upon choosing the room, the interface displays the electrical floor plan P for the room annotated with auto generated physical addresses for each piece of building automation equipment, see fig. 5.

All the mounted equipment in the room is detected via Bluetooth and overlaid spatially on the digital floor map. The user can map the identifiers on the floor plan to the detected equipment by dragging and dropping the virtual instance of a piece of building automation equipment to an identifier. Depending on the accuracy of spatial mapping, equipment can also be automatically provided with identifiers.

Currently, it is necessary to change a piece of building automation equipment into programming mode by pressing a button in order to make it receptive to addressing. There exists equipment that use a magnet to trigger the button by indirect contact. In this solution, a digital input (via Bluetooth) is used to trigger a similar response.

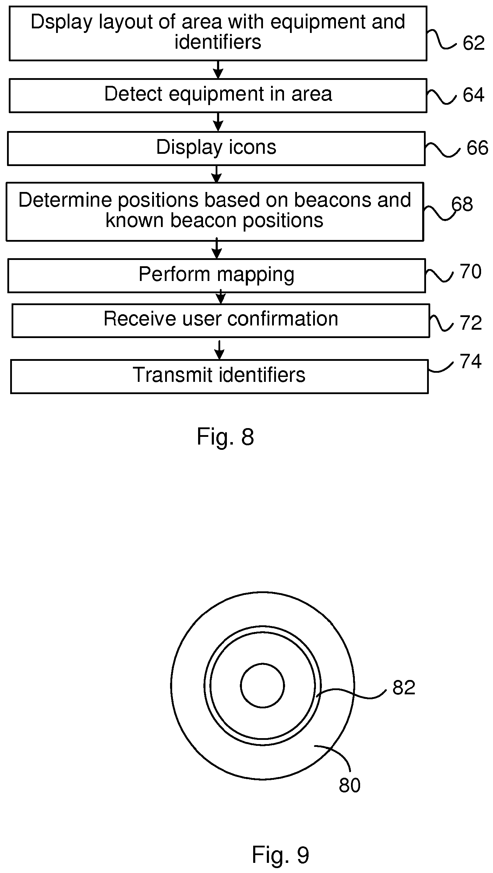

Upon dragging and dropping, the pieces of building automation equipment are assigned their respective physical addresses. The interface also provides feedback on if all devices have been successfully addressed. A second variation will now be described with reference being made to fig. 8, which shows a flow chart of a number of method steps in a method of providing pieces of automation equipment with identifiers and being performed by the portable electronic device 28.

This second variation may use short-range communication based triangulation for locating equipment spatially.

The operation of this second variation may initially be the same as in the first variation.

As the user enters an area, such as the room A shown in fig. 4, he or she may thus also here obtain the plan of the room with pieces of equipment and their allocated identifiers, which may then be displayed on the display, step 62. As can be seen in fig. 5, according to the plan P the area comprises the first, second, third and fourth pieces of automation equipment 20, 22, 24 and 26 with their allocated identifiers ADR1, ADR2, ADR3 and ADR4 in a left side of the display depicting the map of the area A.

Thereafter the control unit 42 detects the pieces of equipment that are actually present in the area, step 64. This detection may also here be performed using the short-range communication interface 38 and 40 and involve receiving information about equipment type. The display 30 may also here display graphical representations of the detected pieces of equipment for instance in the form of icons, step 66. As can also be seen in fig. 5 graphical representations such as icons I1, I2, I3 and I4 may be displayed on a right side of the display 30.

The control unit 42 then determines the positions of the detected pieces of equipment based on beacons and known beacon positions, step 68. It is for instance possible that the positions of two of the pieces of equipment in the area are known, such as for instance the first and fourth pieces of equipment 20 and 26. They may as an example be placed in different corners of the room and these pieces of equipment with known positions may be used as beacons to determine the positions of each one of the other pieces of equipment. As an alternative the user may have brought two short-range beacons that are placed by him or her in different parts of the area, for instance on opposite sides of the room. It is also possible with a combination of such beacons. One may be a beacon brought by the user and the other may be a piece of equipment in the area the position of which is known. Thereby at least one beacon is a beacon placed by the user at a known position in the area and at least one beacon is a piece of building automation equipment in the area.

The control unit 42 in this case determines the positions of the pieces of detected equipment using triangulation based on the positions of the beacons and on the position of the portable electronic device 28, which position may be in the centre of the area or in another corner of the room.

It is also here possible that a check is made whether there is match between the number of pieces of equipment on the plan and the number being detected and that a fault is indicated if the numbers do not match.

After the positions have been determined the control unit 42 then maps the detected equipment to the equipment on the plan P, step 70. This may involve mapping a detected physical piece of building automation equipment at a certain position and represented by an icon to the identifier allocated to the mapped element on the same position of the plan. The detected piece of equipment is also mapped to the identifier allocated to the position. Pieces of equipment may thus be mapped based on the positions being the same, i.e. for which a determined position corresponds to a known position of the piece of equipment. There is thus a fully automatic mapping. It is in this case also possible that the position accuracy and equipment type is verified before the identifiers are actually assigned.

When an automatic mapping is being made, the user may be given the opportunity to confirm the mapping before it is actually carried out, step 72, which confirmation may be made via the user interface 30.

After the physical piece of equipment has been mapped and possibly also confirmed, the control unit 42 then transmits the identifier to the physical piece of equipment via the short-range interface, step 74.

It may here be mentioned that it is possible that the control unit 42 also generates the identifiers of the pieces of automation equipment. It may here apply a numbering convention used in the building automation system,

An identifier may for instance have the form of:
xxx.yyy.zzzz,
where xxx denotes a floor in a building, yyy a room on the floor and zzzz a device address. Thereby the identifier comprises a plan related section comprising the floor and room sections and a device related section with the device address.

The control unit may analyse the floor plan and the number of pieces of equipment on each floor and in each room and generate an identifier for each piece of equipment according to the above-shown numbering convention. Thereby it generates the identifiers using the numbering convention and knowledge of the layout of the building automation system.

It should here be realized that the above given numbering convention is merely one example of a numbering convention that may be used.

The range within which it is possible for the portable electronic device to detect pieces of building automation equipment may be limited by the range of the short-range communication interface. It is possible that all such pieces of equipment that are possible to detect in the area are displayed on the portable electronic device. However, it is also possible that the user may set a limitation of the range within which detected pieces of building automation equipment are being displayed. The user may thus set the range within which detected pieces of equipment are displayed to be shorter than the maximum range of the short-range communication interface, which may help a user to filter out equipment if the number is too high for obtaining a comprehensive view.

As was shown above, the spatial mapping can be achieved using triangulation, if all equipment is Bluetooth enabled.

Using a Bluetooth enabled portable electronic device (e.g. laptop or tablet), the tool supports mapping of auto generated physical addresses and nearby Bluetooth enabled KNX devices using the triangulation method.

The various parts of the system and their functional capabilities are:
1. A Bluetooth enabled portable electronic device running the needed software,
2. KNX devices equipped with Bluetooth, connected to the KNX bus and power supply,
3. Software, i.e. the tool which enables the following features:
   - Auto generation of Physical Addresses: Currently the physical addresses are manually generated based on conventions set by the SI on a case by case basis. The software contained as part of the solution automates the process of physical address generation by taking the convention as input from the user. The tool then scans the electrical floor plans made in Computer Aided Design (CAD) or similar software to identify various pieces of building automation equipment. It then overlays an auto generated physical address for each piece of building automation equipment on the floor plan.
   - Spatial Mapping of Devices: When the user chooses the room he or she is in, the tool uses triangulation to identify the location of the devices in space. The user may have to provide a few points of reference to enable spatial mapping. A digital instance of the detected devices is overlaid on the existing electrical floor plan next to its representation on the floorplan.
   - Switching Device to Programming Mode: When the user drags and drops a physical address to the virtual instance of the piece of equipment or vice versa, the piece of equipment switches to programming mode. In existing solutions, the programming mode is activated either by pushing a button or through infrared (IR) input. This solution uses a digital input sent via Bluetooth to switch the device to programming mode.

The invention has a number of advantages. It provides a simpler and more natural workflow for electrical installers. It contributes to the satisfaction level of the users (EIs) of KNX products, and potentially widens the user group to include EIs lacking KNX experience. By simplifying the process, many manual steps would be reduced, leading to time saving and less errors.

Although Bluetooth was above described as being used for short-range communication, it should be realized that alternatives exist. Examples of such alternatives are Near Field Communication (NFC) or RadioFrequency IDentification (RFID). Also Wi-Fi, i.e. IEEE 802.11 is possible.

The control unit may be provided in the form of a processor with associated program memory including computer program code for performing its functionality. It may also be provided in the form of a digital signal processor (DSP), Application Specific Integrated Circuit (ASIC) or Field-Programmable Gate Array (FPGA).

A computer program may also be a computer program product, for instance in the form of a computer readable storage medium or data carrier, like a CD ROM disc or a memory stick, carrying a computer program with the computer program code, which will implement the functionality of the above-described control unit when being loaded into a processor. One such computer program product in the form of a CD ROM disc 80 with the above-mentioned computer program code 82 is schematically shown in fig. 9.

A computer program product may also be a program provided via a server, such as App Store or Google Play, and downloaded therefrom to the portable electronic device.

While the invention has been described in connection with what is presently considered to be most practical and preferred embodiments, it is to be understood that the invention is not to be limited to the disclosed embodiments. Rather, the invention is defined by the following claims.

## Claims

1. A portable electronic device (28) in a KNX building automation system (10), the portable electronic device comprising a control unit (42) configured to:
detect, via a Bluetooth communication interface (38, 40), pieces of building automation equipment (20, 22, 24, 26) in an area (A) of the KNX building automation system (10) in which the portable electronic device (28) is located,
display the detected pieces of building automation equipment,
display a number of allocated identifiers (ADR1, ADR2, ADR3, ADR4) to be used by the pieces of building automation equipment in the area of the KNX building automation system,
perform a mapping between the identifiers and the detected pieces of building automation equipment, and
transmit the mapped identifiers to the pieces of building automation equipment, via the Bluetooth communication interface, in order for the pieces of building automation equipment to use the identifiers for communication in the KNX building automation system.

2. The portable electronic device (28) according to claim 1, wherein the control unit (42) when performing the mapping is configured to receive a user selection of an identifier and a piece of building automation equipment and perform the mapping between the selected identifier and piece of building automation equipment.

3. The portable electronic device (28) according to claim 1 or 2, wherein the control unit (42) is further configured to determine the positions of the detected pieces of building automation equipment based on a number of known Bluetooth beacon positions and when performing mapping is further configured to map an identifier to a piece of building automation equipment for which the determined position corresponds to a known position of the piece of equipment.

4. The portable electronic device (28) according to claim 3, wherein at least one beacon is a piece of building automation equipment in the area.

5. The portable electronic device (28) according to claim 3 or 4, wherein at least one beacon is a beacon placed by the user at a known position in the area.

6. The portable electronic device (28) according to any previous claim, wherein the control unit (42) when detecting a piece of building automation equipment is further configured to detect the type and when performing mapping is further configured to map an identifier to a piece of building automation equipment based on type.

7. The portable electronic device (28) according to any previous claim, wherein the control unit (42) when displaying allocated identifiers is configured to display a plan of the area with elements representing pieces of building automation equipment together with the allocated identifiers, when being configured to display the detected pieces of building automation equipment is configured to display graphical representations (I1, I2, I3, I4) of the detected pieces of building automation equipment and when being configured to perform the mapping is configured to move graphical representations (I1, I2, I3, I4) of the detected pieces of building automation equipment to the corresponding elements in the plan.

8. The portable electronic device (28) according to any previous claim, wherein the identifiers comprise an plan related section and a device related section provided according a numbering convention, wherein the control unit is further configured to generate the identifiers using the numbering convention and knowledge of the layout of the KNX building automation system.

9. A method for providing pieces of building automation equipment in a KNX building automation system with identifiers, the method being carried out by a portable electronic device (28) and comprising:
detecting (52; 62), via a Bluetooth communication interface (38, 40),
pieces of building automation equipment (20, 22, 24, 26) in an area (A) of the KNX building automation system (10) in which the portable electronic device (28) is located,
displaying (54; 66), the detected pieces of building automation equipment,
displaying (50; 62) a number of allocated identifiers (ADR1, ADR2, ADR3, ADR4) to be used by the pieces of building automation equipment in the area of the KNX building automation system,
performing a mapping (58; 70) between the identifiers and the detected pieces of building automation equipment, and
transmitting (60; 74) the mapped identifiers to the pieces of building automation equipment, via the Bluetooth communication interface, in order for the pieces of building automation equipment to use the identifiers for communication in the KNX building automation system.

10. The method according to claim 9, wherein the mapping comprises receiving (56) a user selection of an identifier and a detected piece of building automation equipment and perform the mapping between the selected identifier and piece of building automation equipment.

11. The method according to claim 9 or 10, further comprising determining (68) the positions of the detected pieces of building automation equipment based on a number of known Bluetooth beacon positions and the mapping (70) comprises mapping an identifier to a piece of building automation equipment for which the determined position corresponds to a known position of the piece of equipment.

12. The method according to any of claims 9 - 11, wherein the detecting of pieces of building automation equipment further comprises detecting the type of equipment, and the performing of mapping comprises mapping an identifier to a piece of building automation equipment based on type.

13. The method according to any of claims 9 - 12, wherein the displaying of allocated identifiers is performed through displaying (50; 62) a plan of the area with elements representing pieces of building automation equipment together with the allocated identifiers, the displaying of detected pieces of building automation equipment comprises displaying graphical representations (I1, I2, I3, I4) of the detected pieces of building automation equipment and the to performing of the mapping comprises moving graphical representations (I1, I2, I3, I4) of the detected pieces of building automation equipment to the corresponding elements in the plan.

14. The method according to any of claims 9 - 13, wherein the identifiers comprise a plan related section and a device related section provided according a numbering convention, wherein the control unit is further configured to generate the identifiers using the numbering convention and knowledge of the layout of the KNX building automation system.

15. A computer program product for providing pieces of building automation equipment in a KNX building automation system (10) with identifiers, the computer program product comprising computer program code (82) which when run in a control unit (42) of a portable electronic device (28), causes the control unit (42) to:
detect, via a Bluetooth communication interface (38, 40), pieces of building automation equipment (20, 22, 24, 26) in an area (A) of the KNX building automation system (10) in which the portable electronic device (28) is located,
display, the detected pieces of building automation equipment,
display a number of allocated identifiers (ADR1, ADR2, ADR3, ADR4) to be used by the pieces of building automation equipment in the area of the KNX building automation system,
perform a mapping (58; 70) between the identifiers and the detected pieces of building automation equipment, and
transmit the mapped identifiers to the pieces of building automation equipment, via the Bluetooth communication interface, in order for the pieces of building automation equipment to use the identifiers for communication in the KNX building automation system.

## Patentansprüche

1. Tragbare elektronische Vorrichtung (28) in einem KNX-Gebäudeautomatisierungssystem (10), wobei die tragbare elektronische Vorrichtung eine Steuereinheit (42) umfasst, die konfiguriert ist zum:
Detektieren über eine Bluetooth-Kommunikationsschnittstelle (38, 40) von Teilen der Gebäudeautomatisierungsanlage (20, 22, 24, 26) in einem Bereich (A) des KNX-Gebäudeautomatisierungssystems (10), in dem sich die tragbare elektronische Vorrichtung (28) befindet,
Anzeigen der detektierten Teile der Gebäudeautomatisierungsanlage,
Anzeigen einer Anzahl von zugeteilten Kennungen (ADR1, ADR2, ADR3, ADR4), die durch die Teile der Gebäudeautomatisierungsanlage in dem Bereich des KNX-Gebäudeautomatisierungssystems zu verwenden sind,
Ausführen einer Abbildung zwischen den Kennungen und den detektierten Teilen der Gebäudeautomatisierungsanlage und
Senden der abgebildeten Kennungen an die Teile der Gebäudeautomatisierungsanlage über die Bluetooth-Kommunikationsschnittstelle, damit die Teile der Gebäudeautomatisierungsanlage die Kennungen für eine Kommunikation in dem KNX-Gebäudeautomatisierungssystem verwenden.

2. Tragbare elektronische Vorrichtung (28) nach Anspruch 1, wobei die Steuereinheit (42) dann, wenn sie die Abbildung ausführt, konfiguriert ist, eine Anwenderauswahl einer Kennung und eines Teils der Gebäudeautomatisierungsanlage zu empfangen und die Abbildung zwischen der ausgewählten Kennung und dem Teil der Gebäudeautomatisierungsanlage auszuführen.

3. Tragbare elektronische Vorrichtung (28) nach Anspruch 1 oder 2, wobei die Steuereinheit (42) ferner konfiguriert ist, die Positionen der detektierten Teile der Gebäudeautomatisierungsanlage anhand einer Anzahl von bekannten Bluetooth-Baken-Positionen zu bestimmen, und dann, wenn sie eine Abbildung ausführt, ferner konfiguriert ist, eine Kennung auf einen Teil der Gebäudeautomatisierungsanlage abzubilden, für den die bestimmte Position einer bekannten Position des Teils des Geräts entspricht.

4. Tragbare elektronische Vorrichtung (28) nach Anspruch 3, wobei zumindest eine Bake ein Teil der Gebäudeautomatisierungsanlage in dem Bereich ist.

5. Tragbare elektronische Vorrichtung (28) nach Anspruch 3 oder 4, wobei mindestens eine Bake eine Bake ist, die durch den Anwender an einer bekannten Position in dem Bereich platziert wurde.

6. Tragbare elektronische Vorrichtung (28) nach einem vorhergehenden Anspruch, wobei die Steuereinheit (42) dann, wenn sie einen Teil der Gebäudeautomatisierungsanlage detektiert, ferner konfiguriert ist, den Typ zu detektieren, und dann, wenn sie eine Abbildung ausführt, ferner konfiguriert ist, eine Kennung auf einen Teil der Gebäudeautomatisierungsanlage anhand des Typs abzubilden.

7. Tragbare elektronische Vorrichtung (28) nach einem vorhergehenden Anspruch, wobei die Steuereinheit (42) dann, wenn sie zugeteilte Kennungen anzeigt, konfiguriert ist, einen Plan des Bereichs mit Elementen, die Teile der Gebäudeautomatisierungsanlage repräsentieren, zusammen mit den zugeteilten Kennungen anzuzeigen, dann, wenn sie konfiguriert ist, die detektierten Teile der Gebäudeautomatisierungsanlage anzuzeigen, sie konfiguriert ist, grafische Repräsentationen (I1, I2, I3, I4) der detektierten Teile der Gebäudeautomatisierungsanlage anzuzeigen, und dann, wenn sie konfiguriert ist, die Abbildung auszuführen, konfiguriert ist, grafische Repräsentationen (I1, I2, I3, I4) der detektierten Teile der Gebäudeautomatisierungsanlage zu den entsprechenden Elementen in dem Plan zu bewegen.

8. Tragbare elektronische Vorrichtung (28) nach einem vorhergehenden Anspruch, wobei die Kennungen einen planbezogenen Abschnitt und einen vorrichtungsbezogenen Abschnitt umfassen, die gemäß einer Nummerierungsvereinbarung vorgesehen sind, wobei die Steuereinheit ferner konfiguriert ist, die Kennungen unter Verwendung der Nummerierungsvereinbarung und des Wissens der Gestaltung des KNX-Gebäudeautomatisierungssystems zu erzeugen.

9. Verfahren zum Versorgen von Teilen der Gebäudeautomatisierungsanlage in einem KNX-Gebäudeautomatisierungssystem mit Kennungen, wobei das Verfahren durch eine tragbare elektronische Vorrichtung (28) ausgeführt wird und Folgendes umfasst:
Detektieren (52; 62) über eine Bluetooth-Kommunikationsschnittstelle (38, 40) von Teilen der Gebäudeautomatisierungsanlage (20, 22, 24, 26) in einem Bereich (A) des NKX-Gebäudeautomatisierungssystems (10), in dem sich die tragbare elektronische Vorrichtung (28) befindet,
Anzeigen (54;66) der detektierten Teile der Gebäudeautomatisierungsanlage,
Anzeigen (50; 62) einer Anzahl von zugeteilten Kennungen (ADR1, ADR2, ADR3, ADR4), die durch die Teile der Gebäudeautomatisierungsanlage in dem Bereich des KNX-Gebäudeautomatisierungssystems zu verwenden sind,
Ausführen einer Abbildung (58; 70) zwischen den Kennungen und den detektierten Teilen der Gebäudeautomatisierungsanlage und
Senden (60; 74) der abgebildeten Kennungen an die Teile der Gebäudeautomatisierungsanlage über die Bluetooth-Kommunikationsschnittstelle, damit die Teile der Gebäudeautomatisierungsanlage die Kennungen für eine Kommunikation in dem KNX-Gebäudeautomatisierungssystem verwenden.

10. Verfahren nach Anspruch 9, wobei das Abbilden umfasst, eine Anwenderauswahl einer Kennung und eines detektierten Teils der Gebäudeautomatisierungsanlage zu empfangen (56) und die Abbildung zwischen der ausgewählten Kennung und dem Teil der Gebäudeautomatisierungsanlage auszuführen.

11. Verfahren nach Anspruch 9 oder 10, das ferner umfasst, die Positionen der detektierten Teile der Gebäudeautomatisierungsanlage anhand einer Anzahl von bekannten Bluetooth-Baken-Positionen zu bestimmen (68), und das Abbilden (70) umfasst, eine Kennung auf einen Teil der Gebäudeautomatisierungsanlage, für den die bestimmte Position einer bekannten Position des Teils der Anlage entspricht, abzubilden.

12. Verfahren nach einem der Ansprüche 9-11, wobei das Detektieren der Teile der Gebäudeautomatisierungsanlage ferner umfasst, den Typ des Geräts zu detektieren, und das Ausführen der Abbildung umfasst, eine Kennung auf einen Teil der Gebäudeautomatisierungsanlage anhand des Typs abzubilden.

13. Verfahren nach einem der Ansprüche 9-12, wobei das Anzeigen von zugeteilten Kennungen durch Anzeigen (50; 62) eines Plans des Bereichs mit Elementen, die Teile der Gebäudeautomatisierungsanlage repräsentieren, zusammen mit den zugeteilten Kennungen ausgeführt wird, wobei das Anzeigen von detektierten Teilen der Gebäudeautomatisierungsanlage umfasst, grafische Repräsentationen (I1, I2, I3, I4) der detektierten Teile der Gebäudeautomatisierungsanlage anzuzeigen, und das Ausführen der Abbildung umfasst, grafische Repräsentationen (I1, I2, I3, I4) der detektierten Teile der Gebäudeautomatisierungsanlage zu den entsprechenden Elementen in dem Plan zu bewegen.

14. Verfahren nach einem der Ansprüche 9-13, wobei die Kennungen einen planbezogenen Abschnitt und einen vorrichtungsbezogenen Abschnitt umfassen, die gemäß einer Nummerierungsvereinbarung vorgesehen sind, wobei die Steuereinheit ferner konfiguriert ist, die Kennungen unter Verwendung der Nummerierungsvereinbarung und des Wissens der Gestaltung des KNX-Gebäudeautomatisierungssystems zu erzeugen.

15. Computerprogrammprodukt zum Versorgen von Teilen der Gebäudeautomatisierungsanlage in einem KNX-Gebäudeautomatisierungssystem (10) mit Kennungen, wobei das Computerprogrammprodukt Computerprogrammcode (82) umfasst, der dann, wenn er in einer Steuereinheit (42) einer tragbaren elektronischen Vorrichtung (28) läuft, bewirkt, dass die Steuereinheit (42):
über eine Bluetooth-Kommunikationsschnittstelle (38, 40) Teile der Gebäudeautomatisierungsanlage (20, 22, 24, 26) in einem Bereich (A) des KNX-Gebäudeautomatisierungssystems (10), in dem sich die tragbare elektronische Vorrichtung (28) befindet, detektiert,
die detektierten Teile der Gebäudeautomatisierungsanlage anzeigt,
eine Anzahl von zugeteilten Kennungen (ADR1, ADR2, ADR3, ADR4) anzeigt, die durch die Teile der Gebäudeautomatisierungsanlage in dem Bereich des KNX-Gebäudeautomatisierungssystems zu verwenden sind,
eine Abbildung (58; 70) zwischen den Kennungen und den detektierten Teilen der Gebäudeautomatisierungsanlage ausführt und
die abgebildeten Kennungen an die Teile der Gebäudeautomatisierungsanlage über die Bluetooth-Kommunikationsschnittstelle sendet, damit die Teile der Gebäudeautomatisierungsanlage die Kennungen für eine Kommunikation in dem KNX-Gebäudeautomatisierungssystem verwenden.

## Revendications

1. Dispositif électronique portable (28) dans un système d'automatisation du bâtiment KNX (10), le dispositif électronique portable comprenant une unité de commande (42) configurée pour :
détecter, par l'intermédiaire d'une interface de communication Bluetooth (38, 40), des pièces d'équipement d'automatisation du bâtiment (20, 22, 24, 26) dans une zone (A) du système d'automatisation du bâtiment KNX (10) dans laquelle le dispositif électronique portable (28) est situé,
afficher les pièces d'équipement d'automatisation du bâtiment détectées,
afficher un nombre d'identificateurs attribués (ADR1, ADR2, ADR3, ADR4) à utiliser par les pièces d'équipement d'automatisation du bâtiment dans la zone du système d'automatisation du bâtiment KNX,
réaliser une mise en correspondance entre les identificateurs et les pièces d'équipement d'automatisation du bâtiment détectées, et
transmettre les identificateurs mis en correspondance avec les pièces d'équipement d'automatisation du bâtiment, par l'intermédiaire de l'interface de communication Bluetooth, afin que les pièces d'équipement d'automatisation du bâtiment utilisent les identificateurs pour la communication dans le système d'automatisation du bâtiment KNX.

2. Dispositif électronique portable (28) selon la revendication 1, l'unité de commande (42), lorsqu'elle réalise la mise en correspondance, étant configurée pour recevoir une sélection par l'utilisateur d'un identificateur et d'une pièce d'équipement d'automatisation du bâtiment et réaliser la mise en correspondance entre l'identificateur sélectionné et une pièce d'équipement d'automatisation du bâtiment.

3. Dispositif électronique portable (28) selon la revendication 1 ou 2, l'unité de commande (42) étant en outre configurée pour déterminer les positions des pièces d'équipement d'automatisation du bâtiment détectées sur la base d'un nombre de positions connues de balises Bluetooth et, lors de la réalisation, la mise en correspondance étant en outre configurée pour mettre en correspondance un identificateur avec une pièce d'équipement d'automatisation du bâtiment pour laquelle la position déterminée correspond à une position connue de la pièce d'équipement.

4. Dispositif électronique portable (28) selon la revendication 3, au moins une balise étant une pièce d'équipement d'automatisation du bâtiment dans la zone.

5. Dispositif électronique portable (28) selon la revendication 3 ou 4, au moins une balise étant une balise placée par l'utilisateur au niveau d'une position connue dans la zone.

6. Dispositif électronique portable (28) selon l'une quelconque des revendications précédentes, l'unité de commande (42), lors de la détection d'une pièce d'équipement d'automatisation du bâtiment, étant en outre configurée pour détecter le type et, lors de la réalisation, la mise en correspondance étant en outre configurée pour mettre en correspondance un identificateur avec une pièce d'équipement d'automatisation du bâtiment sur la base du type.

7. Dispositif électronique portable (28) selon l'une quelconque des revendications précédentes, l'unité de commande (42), lorsqu'elle affiche les identificateurs attribués, étant configurée pour afficher un plan de la zone avec des éléments représentant des pièces d'équipement d'automatisation du bâtiment avec les identificateurs attribués, lorsqu'elle est configurée pour afficher les pièces d'équipement d'automatisation du bâtiment détectées, étant configurée pour afficher les représentations graphiques (I1, I2, I3, I4) des pièces d'équipement d'automatisation du bâtiment détectées et lorsqu'elle est configurée pour réaliser la mise en correspondance, étant configurée pour déplacer les représentations graphiques (I1, I2, I3, I4) des pièces d'équipement d'automatisation du bâtiment détectées vers les éléments correspondants dans le plan.

8. Dispositif électronique portable (28) selon l'une quelconque des revendications précédentes, les identificateurs comprenant une section relative au plan et une section relative au dispositif fournie en fonction d'une convention de numérotation, l'unité de commande étant en outre configurée pour générer les identificateurs en utilisant la convention de numérotation et la connaissance de la disposition du système d'automatisation du bâtiment KNX.

9. Procédé pour fournir des pièces d'équipement d'automatisation du bâtiment dans un système d'automatisation du bâtiment KNX avec des identificateurs, le procédé étant réalisé par un dispositif électronique portable (28) et comprenant :
la détection (52 ; 62), par l'intermédiaire d'une interface de communication Bluetooth (38, 40), de pièces d'équipement d'automatisation du bâtiment (20, 22, 24, 26) dans une zone (A) du système d'automatisation du bâtiment KNX (10) dans laquelle le dispositif électronique portable (28) est situé,
l'affichage (54 ; 66), des pièces d'équipement d'automatisation du bâtiment détectées,
l'affichage (50 ; 62) d'un nombre d'identificateurs attribués (ADR1, ADR2, ADR3, ADR4) à utiliser par les pièces d'équipement d'automatisation du bâtiment dans la zone du système d'automatisation du bâtiment KNX,
la réalisation d'une mise en correspondance (58 ; 70) entre les identificateurs et les pièces d'équipement d'automatisation du bâtiment détectés, et
la transmission (60 ; 74) des identificateurs mis en correspondance avec les pièces d'équipements d'automatisation du bâtiment, par l'intermédiaire de l'interface de communication Bluetooth, afin que les pièces d'équipement d'automatisation du bâtiment utilisent les identificateurs pour la communication dans le système d'automatisation du bâtiment KNX.

10. Procédé selon la revendication 9, la mise en correspondance comprenant la réception (56) d'une sélection par l'utilisateur d'un identificateur et d'une pièce d'équipement d'automatisation du bâtiment détectée et la réalisation de la mise en correspondance entre l'identificateur sélectionné et la pièce d'équipement d'automatisation du bâtiment.

11. Procédé selon la revendication 9 ou 10, comprenant en outre la détermination (68) des positions des pièces d'équipement d'automatisation du bâtiment détectées sur la base d'un nombre de positions connues de balises Bluetooth et la mise en correspondance (70) comprenant la mise en correspondance d'un identificateur avec une pièce d'équipement d'automatisation du bâtiment pour laquelle la position déterminée correspond à une position connue de la pièce d'équipement.

12. Procédé selon l'une quelconque des revendications 9 à 11, la détection de pièces d'équipement d'automatisation du bâtiment comprenant en outre la détection du type d'équipement, et la réalisation de la mise en correspondance comprenant la mise en correspondance d'un identificateur avec une pièce d'équipement d'automatisation du bâtiment sur la base du type.

13. Procédé selon l'une quelconque des revendications 9 à 12, l'affichage des identificateurs attribués étant réalisé au moyen de l'affichage (50 ; 62) d'un plan de la zone avec des éléments représentant des pièces d'équipement d'automatisation du bâtiment avec les identificateurs attribués, l'affichage des pièces d'équipement d'automatisation du bâtiment détectées comprenant l'affichage de représentations graphiques (I1, I2, I3, I4) des pièces d'équipement d'automatisation du bâtiment détectées et la réalisation de la mise en correspondance comprenant le déplacement des représentations graphiques (I1, I2, I3, I4) des pièces d'équipement d'automatisation du bâtiment détectées vers les éléments correspondants dans le plan.

14. Procédé selon l'une quelconque des revendications 9 à 13, les identificateurs comprenant une section relative au plan et une section relative au dispositif fournie en fonction d'une convention de numérotation, l'unité de commande étant en outre configurée pour générer les identificateurs en utilisant la convention de numérotation et la connaissance de la disposition du système d'automatisation du bâtiment KNX.

15. Produit de programme informatique pour fournir des pièces d'équipement d'automatisation du bâtiment dans un système d'automatisation du bâtiment KNX (10) avec des identificateurs, le produit de programme informatique comprenant un code de programme informatique (82) qui, lorsqu'il est exécuté dans une unité de commande (42) d'un dispositif électronique portable (28), amène l'unité de commande (42) à :
détecter, par l'intermédiaire d'une interface de communication Bluetooth (38, 40), des pièces d'équipement d'automatisation du bâtiment (20, 22, 24, 26) dans une zone (A) du système d'automatisation du bâtiment KNX (10) dans laquelle le dispositif électronique portable (28) est situé,
afficher, les pièces d'équipement d'automatisation du bâtiment détectées,
afficher un nombre d'identificateurs attribués (ADR1, ADR2, ADR3, ADR4) à utiliser par les pièces d'équipement d'automatisation du bâtiment dans la zone du système d'automatisation du bâtiment KNX,
réaliser une mise en correspondance (58 ; 70) entre les identificateurs et les pièces d'équipement d'automatisation du bâtiment détectées, et
transmettre les identificateurs mis en correspondance avec les pièces d'équipement d'automatisation du bâtiment, par l'intermédiaire de l'interface de communication Bluetooth, afin que les pièces d'équipement d'automatisation du bâtiment utilisent les identificateurs pour la communication dans le système d'automatisation du bâtiment KNX.
